# EUROPEAN PATENT APPLICATION

(11) **EP 3 778 525 A1**
(43) Date of publication of application: **17.02.2021**
(21) Application number: 20180551.2
(22) Date of filing: 17.06.2020
(51) Int. Cl.: C04B 28/04, C04B 2/00

(54) **IMPROVED METHOD FOR MANUFACTURING SUPPLEMENTARY CEMENTITIOUS MATERIAL**

(71) Applicant: HeidelbergCement AG, 69120 Heidelberg (DE)
(72) Inventor: ZAJAC, Maciej, 69126 Heidelberg (DE); SKOCEK, Jan, 69181 Leimen (DE); BEN HAHA, Mohsen, 69117 Heidelberg (DE); BOLTE, Gerd, 69190 Walldorf (DE)
(74) Representative: Zellentin & Partner mbB Patentanwälte

(57) **Abstract**

Method of manufacturing supplementary cementitious materials by carbonation of a waste material rich in carbonatable Ca and Mg phases, wherein a starting material is provided containing the waste material and having a maximum particle size of 2 mm, a sulfate is added to the starting material in an amount ranging from 0.01 to 10 g per g starting material, the starting material is carbonated in the presence of a sulfate, and a carbonated product is obtained and provided as the supplementary cementitious material.

## Description

The present invention relates to a method of manufacturing supplementary cementitiuous material (SCM) from Ca and Mg rich waste materials, like concrete waste, especially recycled concrete fines (RCF), the product obtained, its use in composite binders and the composite binders obtained.

Reduction of CO₂ emissions associated with cement production is challenging in view of the increasing cement demand and the fact that a major part of the emissions originates from the main raw material used - limestone - which can be substituted only to an extremely low amount. A Carbon Capture and Utilization (CCU) approach based on mineralization of fines derived from demolished concrete appears to be a viable alternative to reduce these emissions. The CO₂ sequestration and the reactivity of the obtained carbonated recycled fines has been experimentally demonstrated for different mineralization conditions. All CO₂ originally released by limestone calcination during clinker production can be sequestered by a full carbonation of the fines. The carbonated fines have specific CO₂ savings more than 30% higher than the simple clinker replacement by limestone.

However, besides the various proposals already made, see e.g. EP 3 319 923 A1, EP 3 466 900 A1, WO 2019/072640 A1, WO 2019/115722 A1 and the article Skocek et al. "Carbon Capture and Utilization by mineralization of cement pastes derived from recycled concrete", Sci Rep 10, 5614 (2020) (https://doi.org/10.1038/s41598-020-62503-z) and the prior art mentioned therein, there is still a need for more reactive products and/or more effective sequestration.

Surprisingly it has now been found that carbonation of hardened cement paste in the presence of a considerable and targetly adjusted amount of sulfate results in higher reactivity of the obtained carbonated product. This new supplementary cementitious material is made from concrete waste, especially from recycled concrete fines, or from other waste material rich in carbonatable Ca and Mg phases which is transformed by an accelerated, semi dry or wet carbonation process in the presence of sodium sulfate or other sulfate salts.

Thus, the above object is solved by a method of manufacturing supplementary cementitious materials by carbonation of waste materials rich in carbonatable Ca and Mg phases with a maximum particle size of 2 mm as starting material, wherein a sulfate is present during carbonation, wherein the amount of sulfate is adjusted to lie in the range from 0.01 to 10 g per g starting material. The object is also solved by an SCM being the carbonated product obtained, its use in composite binders and the obtained composite binders.

Further, to simplify the description the usual cement chemist notation for oxides: H - H₂O, C - CaO, A - Al₂O₃, F - Fe₂O₃, M - MgO, S - SiO₂ and $ - SO₃ is used. Also, compounds are mostly named by the pure form, without explicit mentioning of solid solutions, foreign ion substitution and impurities etc. as are usual in technical and industrial materials. As one of ordinary skill in the art knows, the exact composition of phases may vary due to substitution with foreign ions. Such compounds are comprised when mentioning the pure form herein unless it is expressly stated otherwise.

Cement designates a material that, after mixing with an aqueous liquid to form a paste, is able to develop mechanical strength by hydraulic reaction. Thus, cement mostly denotes a clinker ground with or without further components, but also mixtures like super sulphated cement, geopolymer binder, and hydraulic materials not obtained by sintering like a dicalcium silicate obtained by hydrothermal treatment.

Composite binder or binder mixture means a mixture containing cement and a supplementary cementitious material. A binder is usually used adding water or another liquid and mostly also aggregate. Typically, admixtures and/or additives are added to the binder and/or the paste.

Hydraulically hardening building material means a wet mixture that is able to harden hydraulically, and comprises a cement or binder as well as optionally any other addition contained to adjust the properties like final strength, processability of the wet mixture and strength development properties, to the intended use of the building material. For example, a concrete used to build a bridge needs other properties than a screed for casting a floor or a mortar for laying bricks.

Building structure denotes the hardened building material, e.g. a pre-cast concrete element or a floor or a bridge part from cast in place concrete.

Waste material rich in carbonatable Ca and Mg phases means that at least 12.5 wt.-% of the waste material calculated as oxides is CaO and MgO and at least 80 wt.-% of the CaO and MgO is in carbonatable phases before carbonation. Preferably, CaO and MgO constitute at least 20 wt.-%, more preferably at least 30 wt.-% and most preferred at least 50 wt.-% of the waste material. Preferably, at least 85 wt.-%, more preferably at least 90 wt.-% of the CaO and MgO are in carbonatable phases. Thus, while a part of the carbonatable CaO and MgO in the waste material might be already carbonated before carbonation, at least 10 wt.-% of the material calculated as oxides is carbonatable but not yet carbonated CaO and MgO. In the following description explanations only referring to calcium carbonate shall include magnesium carbonate and mixtures of calcium and magnesium carbonate unless the context does not allow it.

Concrete waste covers all materials that occur in the use of cement, binder and hydraulically hardening building materials. One typical example is recycled concrete fines from demolition of concrete buildings and structures. Further examples are remains from hydraulically hardening building materials, like concrete and mortar prepared and then superfluous, and solid parts in the wastewater from cleaning devices for concreting, like concrete trucks, mortar mixers, and molds for precast concrete parts.

Concrete demolition waste designates the crushed material obtained during demolition of concrete containing structures like buildings and traffic surfaces from which the foreign materials like wood, metal parts, brick parts, and plastic, have been substantially completely removed. Concrete demolition waste contains the hardened binder paste and aggregates. The aggregate size in the concrete demolition waste depends on the settings in the crushing and grinding, usually crushing and grinding continues until the maximum particle size is 150 mm or smaller, preferably 100 mm or smaller, more preferred 50 mm or smaller and most preferred 32 mm or smaller. The aggregate contained in the concrete demolition waste typically carries adhered binder paste on the surface. The adhered hardened binder paste often adheres two or more aggregate particles together. Typical aggregate used in concrete has a maximum particle size of 32 mm, so particles in the starting material above this size result from two or more aggregate particles being adhered together by the hardened binder paste. Recycled concrete fines, abbreviated RCF, means the hardened binder paste with varying content of small aggregate obtained from concrete demolition waste by crushing and cutting off coarse aggregates (particle size limit e.g. 4 mm or 8 mm or 16 mm). A strict separation of hardened binder paste from aggregates is very difficult, so RCF usually contains a considerable amount of the small size aggregate, predominantly sand, and depending on the particle size limit applied also bigger aggregate like gravel and correspondingly sized agglomerates of small aggregate still adhered together by hardened binder paste. Usually, RCF contains mostly the ground hardened binder paste together with fine sand/aggregates, usually in amounts of 30 to 80 wt.-% of the total material weight. Typical compositions of four typical RCF (which contain fine aggregates being mostly quartz) are shown in table 1.

**Table 1**

| [00015] | **RCF 1** | **RCF 2** | **RCF 3** | **RCF 4** |
|---|---|---|---|---|
| chemical composition [wt.-%] | | | | |
| LOI | 17.98 | 21.59 | 12.23 | 7.89 |
| SiO₂ | 43.02 | 43.63 | 54.72 | 74.15 |
| Al₂O₃ | 6.38 | 5.70 | 6.32 | 3.64 |
| Fe₂O₃ | 3.02 | 2.74 | 2.36 | 1.43 |
| CaO | 24.39 | 21.51 | 18.29 | 10.44 |
| MgO | 1.39 | 1.22 | 1.81 | 0.90 |
| K₂O | 0.80 | 0.76 | 1.00 | 0.77 |
| Na₂O | 0.35 | 0.32 | 0.42 | 0.28 |
| SO₃ | 1.21 | 1.07 | 1.28 | 0.69 |

| minerological composition [wt.-%] | | | | |
|---|---|---|---|---|
| Quartz | 28.3 | 28.7 | 39.1 | 58.4 |
| Calcite | 13.9 | 13.6 | 6.2 | 2.7 |
| Dolomite | 2.4 | 1.7 | - | - |

According to the invention waste materials rich in carbonatable Ca and Mg phases, e.g. hydrates, and preferably with high specific surface area, preferably selected from RCA and RCF (recycled concrete aggregates and fines), fly ashes, slags and mixtures thereof, are used as starting material. The waste materials used as starting material in the method according to the invention are preferably concrete waste, typically concrete fines (hydrated cement paste) obtained from the recycling of demolished concrete or fresh concrete waste. Usually, concrete demolition waste is separated into a coarse fraction comprising mainly aggregate (RCA) and a fine fraction comprising mainly hardened cement paste (RCF). Also, non-mineral components are removed from the demolition material, above all metals and organic constituents like wood. RCF obtained like that as well as residues from cleaning RCA are a preferred starting material according to the invention. Likewise, concrete residues arising during building, e.g. but not limited to unused ready mix concrete and left over mortar, are very suitable raw materials. They will be crushed to separate hardened cement paste from aggregate, and the finer fraction will usually be ground to provide the starting material according to the invention. Also cement that has been stored too long and partially hydrated is useful, if needed after crushing and/or grinding. Further, the waste arising during cleaning of devices used in concreting, e.g. molds for manufacturing pre-cast concrete elements, especially the filter cake from pre-cast plants, is suitable, if needed after crushing and/or grinding.

The maximum particle size of the starting material is lower than 2 mm, preferably lower than 1 mm, most preferred lower than 0.5 mm.

According to the invention, carbonation takes place with an adjusted amount of sulfate being present. Although the waste materials rich in carbonatable Ca and Mg phases often contain sulfates, the amount is too low, namely lower than 10 wt.-% sulfates, often lower than 8 wt.-% and mostly lower than 4 %. For example, recycled concrete fines results from cement containing up to 5 wt.-% sulfate, which is diluted by aggregate in the RCF, resulting in much less than 0.01 g sulfate per g waste material. Suitable sulfates are especially alkali and earth alkali sulfates, e.g. calcium sulfate, magnesium sulfate, sodium sulfate, and potassium sulfate, preferred are calcium, sodium and potassium sulfate, most preferred are potassium and sodium sulfate. The amount of sulfate is adjusted to range from 0.01 to 10 g, preferably from 0.1 to 8 g, and most preferred from 0.2 to 5 g, per g of starting material.

In the wet process the concentration of sulfate calculated as SO₄²⁻ranges from 0.01 to 1 mol/l, preferably from 0.02 to 0.5 mol/l and most preferred from 0.05 to 0.4 mol/l. Such concentrations are obtained for the typical amounts of water used, which are chosen to provide a suspension that can be well stirred with an amount of water as low as possible. In the semi-dry process an analogous concentration of sulfate is desirable in the water phase present on the particle surface and inside the particle pores. The concentration can be estimated using "press filtration": the pore solutions is extracted from the not hardened semi wet material pastes using pressure filtration. For this one uses e.g. a cylindrical container. One end of the container is closed with a filter, e.g. a 0.45 µm nylon filter. The other end is provided with a closing to enable gas inlet or with a movable piston. The sample is loaded into the container and the container is closed. Pressure is applied to the sample, for example by introducing compressed N₂ gas. As a result the solution is pressed out from the sample. The concentration of sulfate is then determined in the obtained solution in a manner known as such.

In one embodiment, the carbonation process can be a semi-dry process. For this process, the starting material is preferably homogenized with the sulfate. The carbonation is performed under conditions allowing the formation of a layer of solution on the surface of the starting material particles and/or in the pores of it. Thus, a suitable relative humidity typically ranges from 70 - 99 -%, preferably from 80 - 99 %, and most preferably from 90 - 99 %. The temperature should range from 20 - 150 °C while the time depends on the CO₂ concentration. Provided that there is enough CO₂ (high concentration or high gas flow), the carbonation time can be several minutes, while hours are needed where the gas contains little CO₂ or for slow flow rates. The water amount of the starting material (e.g. RCF / RCP) is usually set in the range from 5 - 30 wt.-%.

In another embodiment, the carbonation process can be a wet process. Here the sulfate can be blended with the starting material or added to the water mixed with the starting material to provide the carbonation suspension. Typically, the suspension has a water solids mass ratio in the range from 100 to 0.5, preferably from 50 to 1, and most preferred from 5 to 2. Carbonation can be performed at temperatures from 0 to 99 °C, preferably from 10 to 80 °C and most preferred from 15 to 60 °C. The carbonation time is typically from 1 second to 10 hours, preferably from 10 second and 8 hours, and most preferred from 15 second and 6 hours. The time depends on the concentration of carbon dioxide, higher concentration allows shorter times and lower concentration requires longer times. The CO₂ may be introduced as gas or as a liquid. The gaseous CO₂ is preferably injected into the slurry ensuring a high surface area of the gas. The CO₂ concentration in the gas may range from 5 to 100 %, while the flow rate of the gas should be from 1 - 100 liters/hour/g_{cement paste}. To benefit from the sequestration effect exhaust gas from a cement plant is used in one embodiment, which typically has a CO₂ concentration from 14 to 30 Vol.-%, or up to 60 - 90 Vol.-% in case the plant operates in the oxyfuel mode. When a liquid solution of CO₂ is used it can have a concentration of CO₂ from 0.1 to 200 g/l, preferably from 1 to 150 g/l and most preferably from 10 to 100 g/l. Using a solution is advantageous in case the method is carried out in the field, for example to prepare the SCM and make the building material from it directly thereafter as cast in place concrete. During the carbonation the material is advantageously stirred, e.g. mixed in a concrete mixer or concrete truck. The mixing device has to be adapted when CO₂ gas is used to allow its introduction into the paste, preferably via gas distribution unit(s).

It is possible to include additional material into the carbonation, especially into a carbonation suspension of the wet process, that accelerates the carbonation process and/or improves the final properties of the SCM or the building material made with it. Preferably, substances for enhancing the carbonating process or mixtures of two or more thereof are used as additional material. Typically, additional material will be included in an amount from 0.001 to 1 wt.-% with respect to the total starting material.

Suitable materials include aqueous solvents like alkanolamines, for example primary amines like monoethanolamine (MEA) and diglycolamine (DGA), secondary amines like diethanolamine (DEA) and diisopropanolamine (DIPA), and tertiary amines like methyldiethanolamine (MDEA) and triethanolamine (TEA), or mixtures thereof, halogenides, ethylenedinitrilotetraacetic acid (EDTA) or other substances that improve dissolution of CO₂ in the solution. Additionally enzymes such as carbonic anhydrase can be used to enhance carbonation efficiency and modify the properties of the reaction products. It is to be noted that these additions may have not only one action but can exercise a double role. They can e.g. modify the hydration process of the final binder as well as modify the carbonation process. The effect can largely depend on the dosage.

Moreover it is possible to add substances that regulate the pH during the carbonation process in order to enhance the precipitation of calcium carbonate. These include metal hydroxides and carbonates and similar substances.

Further, it is possible to add substances that modify the morphology of the precipitating calcium carbonate during the carbonation process. This provides the advantage of building less dense shales of hydrates-carbonates product and enables higher carbonation and hydration degrees. Suitable are for example magnesium salts, polyacrylic acid, polyacrylamide, polyvinyl alcohol, polyvinyl-sulfonic acids, styrene sulfonate, citric acid and other organic acids, polysaccharides and phosphonates, polycarboxylates.

Furthermore, it is possible to add admixtures that modify properties of the final building material made from the SCM or composite binder according to the invention already to the starting material or to the carbonation suspension (usually those will be added to the building material or composite binder). Often used admixtures are water reducing agents and plasticizers like for example, but not exclusively, organic compounds with one or more from carboxylate, sulfonate, phosphonate, phosphate or alcohol functional groups. These serve to achieve a good consistency, i.e. flowability, of the paste with a smaller amount of water. Since a decrease of water/binder ratio normally provides an increase of strength, such admixtures are commonly used. Air entraining agents are also able to improve flowability and can be used fore this aim or are need for other reasons such as, but not limited to, density modifications, compactibility improvements etc.

Other admixtures that influence workability are retarders. They mainly aim at prolonging the time that a specified consistency is maintained. Retarders slow the setting and/or hardening of the binder paste. Suitable substances are for example, but not exclusively, phosphates, borates, salts of Pb, Zn, Cu, As, Sb, lignosulphonates, hydroxycarboxylic acids and their salts, phosphonates, sugars (saccharides). It is also possible to add admixtures that are designed to modify the rheology properties to control the setting time, i.e. plasticizers and super-plasticizers. Those can have a retarding impact as well, e.g. lignosulphonates, polycarboxylic acids, etc.

All admixtures are used in the amounts known as such, wherein the amount is adapted to a specific binder and special needs in the known manner.

Additives can be added as well to the starting material or carbonation suspension, but usually those are added to the building material or composite binder. Usual and useful additives are e.g. fillers, pigments, reinforcing elements, self-healing agents etc. All these can be added in the amounts known per se.

The carbonation degree of the starting material, i.e. the carbonatable phases in it, is adjusted to range from 1 to 100 %, preferably from 20 to 99 % and most preferably from 30 to 98 %. This results in a reactivity index of the carbonated RCF, i.e. the SCM slurry made according to the invention, of at least 1.1 times, preferably 1.2 times, most preferred 1.3 times, that of limestone (LL according to EN 197-1) at the same replacement level of 30 % of CEM I 32.5 R according to EN 197-1, at 28 days, in mortar. The reactivity index is defined as the ratio of the EN 196-1 mortar strength of the SCM-containing composite binder over the strength of a limestone-containing composite binder.

The obtained carbonated product is dried, if necessary, and/or ground when the fineness is not as desired. Useful particle sizes for the SCM according to the invention determined by laser granulometry should have a d90 ≤ 500 µm, preferably a d90 ≤ 200 µm, and most preferably a d90 ≤ 100 µm. Preferably the particle size distribution has a Rosin-Rammler slope n from 0.6 to 1.4, more preferably from 0.7 to 1.2. Typically, the SCM comprises mainly calcium and magnesium carbonate and amorphous silica and alumina gels or alumina-silica gels and, therefore, has pozzolanic reactivity and is a useful SCM. The product also comprises phases from the starting material that have not been carbonated or are not carbonatable. Due to the presence of an adjusted amount of sulfate during carbonation, the SCM has another chemical composition and/or morphology than SCM made by carbonation without this amount of sulfate. This renders the SCM according to the present invention more reactive compared to SCM made from the same starting material under the same conditions without sulfate addition.

Thus, the product obtained by the method according to the invention is a novel SCM and suitable to make composite binders with higher strength potential or higher SCM content for the same strength potential.

Typically, a composite binder obtained from blending an SCM according to the invention with cement comprises from 5 to 95 wt.-% cement and from 95 to 5 wt.-% SCM. Preferably, it contains from 30 to 90 wt.-% cement and from 70 to 10 wt.-% SCM, more preferred from 50 to 80 wt.-% cement and from 50 to 20 wt.-% SCM. In addition, usual additives and/or admixtures can be used as described above for adding to the starting material. Naturally, the amounts of all components in a specific binder add up to 100 %, so if SCM and cement are the sole components their amounts add up to 100 %, when there are other components, the amount of SCM and cement is less than 100 %. The novel SCM can be used in ternary or quaternary compositions, i.e. blending more than one SCM with the Portland clinker.

Suitable cements are Portland cement (OPC), Portland-composite cement, slag cement, pozzolanic cement, and other composite cements according to EN 197-1, calcium sulfoaluminate cement (CSA), calcium aluminate cement (CAC) and other hydraulic cements including lime as well as components providing with the SCM according to the invention not standardized cements like super sulfated cement and geopolymer cement. Thus, further SCMs like slag, fly ash and other main cement constituents according to EN 197-1 can be added. Preferably, only the SCM according to the invention is contained since that is technically easier. Fly ash is often added to concrete, this is also possible for a building material made according to the invention. The hydraulic component in the composite binder is preferably portland cement.

The composite binder can also comprise one or more other SCM and/or additives. Suitable additional SCM are e.g. but not limited to fly ash, ground granulated blast furnace slag, and calcined clay. Typical additives are e.g. but not limited to fillers like limestone and other stone dust, pigments, fibers and mixtures thereof.

The composite binders is useful for all applications where ordinary portland cement and known composite cements are used, especially concrete, mortar, and construction chemical products such as screed, tile adhesive etc.

Usually, aggregate and admixtures are added when making a hydraulically hardening building material like concrete or mortar from the composite binder according to the invention. The known aggregate and usual admixtures are used in the usual amounts. For construction chemical products like floor screed or tile adhesive any necessary aggregate and admixture is typically added to the composite binder to form a dry mix, as far as possible. The aggregate and admixture are chosen depending on use in a manner well known per se.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Examples

Two industrial waste materials were used as the starting material. The material was ground with a target d90 ~ 100 µm in a laboratory mill to provide the starting material. Wet carbonation in a closed vessel adapted to hold a volume of 10 I liquid was used. The vessel was equipped with a blade mixer and gas inlets with sponge near the bottom. The starting material was mixed with water in a mass ratio solid/liquid of 10, and a volume of the liquid of 10 I. The water contained either 4 g/l NaOH (0.1 M solution) for comparison or amounts of 14 g/l and 70 g/l sodium sulfate (0.1 M and 0.5 M solution) for the method according to the invention. CO₂ (100 Vol.-%) was bubbled for 6 hours through the liquid with a rate of 300 l/h for carbonation. The liquid was stirred continuously with a blade mixer. After carbonation, the samples were dried and ground with a target d90 = 60 µm in a laboratory mill.

Composite binders were made by blending 60 wt.-% commercial Portland cement clinker (∼ 4000 Blaine) with 40 wt.-% of clinker replacement, either limestone (∼ 3500 Blaine) as reference or the carbonated product. In addition, natural anhydrite (∼ 5000 Blaine) was mixed in to provide either 2.8 or 3.2 wt.-% SO₃ in the composite binder. For calculation of the SO₃ content only the SO₃ from clinker and anhydrite was taken into account. The cements were produced in a laboratory blender.

Mortars were prepared by mixing the composite binder, sand and deionized water in weight proportions of 1:1:0.55, i.e. a water/binder ratio of w/b = 0.55. The sand used was composed of quartz grains which had a maximum diameter of 0.4 mm. Mortar cubes with edge lengths of 20 mm were cast, stored in forms for the first 24 hours, demoulded and cured at 20 °C and a RH of 95 % until testing. The compressive strength was determined on an average of 10 mortar cubes for each testing age in a standard EN 196-1 press, but with a loading rate of 0.4 kN/s.

The chemical composition of the starting materials, determined with X ray fluorescence, and the loss on ignition at 950 °C (Loi), is shown in table 1.

**Table 1**

| | | Clinker | Anhydrite | Limestone | DCS | FCS |
|---|---|---|---|---|---|---|
| Loi at 950 °C | % | 0.3 | 4.1 | 42.9 | 21.7 | 33.7 |
| SiO₂-RFA | % | 20.4 | 2.4 | 1.8 | 38.6 | 24.3 |
| Al₂O₃-RFA | % | 5.6 | 0.8 | 0.5 | 6.0 | 5.0 |
| TiO₂-RFA | % | 0.3 | 0.0 | 0.0 | 0.5 | 0.4 |
| MnO-RFA | % | 0.1 | 0.0 | 0.0 | 0.1 | 0.1 |
| Fe₂O₃-RFA | % | 3.8 | 0.3 | 0.1 | 1.9 | 1.1 |
| CaO-RFA | % | 65.2 | 37.9 | 53.5 | 25.4 | 30.0 |
| MgO-RFA | % | 1.6 | 1.6 | 0.5 | 3.1 | 2.7 |
| K₂O-RFA | % | 1.2 | 0.2 | 0.1 | 0.7 | 0.3 |
| Na₂O-RFA | % | 0.2 | 0.00 | 0.00 | 0.4 | 0.2 |
| SO₃-RFA | % | 0.9 | 51.4 | 0.2 | 1.6 | 2.1 |
| P₂O₅-RFA | % | 0.2 | 0.0 | 0.0 | 0.1 | 0.1 |
| Sum | % | 99.7 | 98.8 | 99.5 | 100.0 | 100.02 |

### Example 1

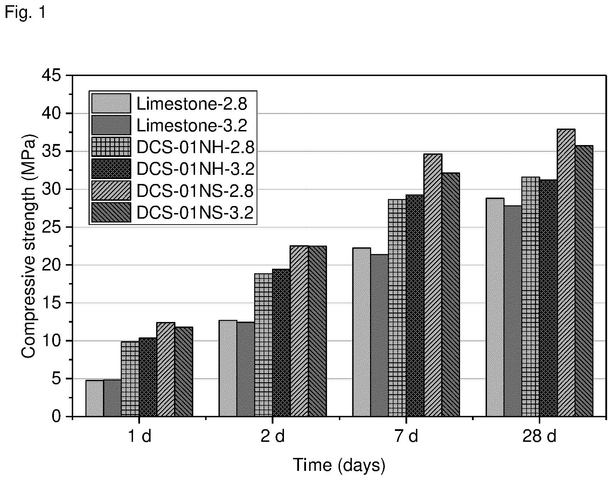

The starting material was so called "dried cyclone slurry", DCS, material obtained from washing the coarse aggregate fraction of demolished concrete, i.e. an industrial recycled hardened cement paste. The material was ground and dried before mixing it into the carbonation liquid. The measured compressive strength of the mortar cubes is illustrated in figure 1 and summarized in table 2.

**Table 2**

| **clinker replacement** / **sulfate level** | **strength [MPa] after** | | | |
|---|---|---|---|---|
| | **1 day** | **2 days** | **7 days** | **28 days** |
| limestone / 2.8 | 4.8 | 12.7 | 22.2 | 28.8 |
| limestone / 3.2 | 4.8 | 12.4 | 21.4 | 27.8 |
| DCS carbonated with NaOH / 2.8 | 9.8 | 18.8 | 28.6 | 31.6 |
| DCS carbonated with NaOH / 3.2 | 10.3 | 19.4 | 29.2 | 31.2 |
| DCS carbonated with sulfate / 2.8 | 12.4 | 22.5 | 34.6 | 37.9 |
| DCS carbonated with sulfate / 3.2 | 11.8 | 22.5 | 32.1 | 35.7 |

The figure and table show that carbonation of the DCS material in a sodium sulphate solution provides SCM with higher compressive strength of the hardened composite binder mortars compared to material carbonated in sodium hydroxide solution. The effect is independent from the SO₃ level in the composite binder. It is also not linked to the sodium content, which is approximately the same in DCS carbonated with sodium hydroxide or sodium sulfate. Carbonated DCS is always more reactive than limestone, an inert filler.

### Example 2

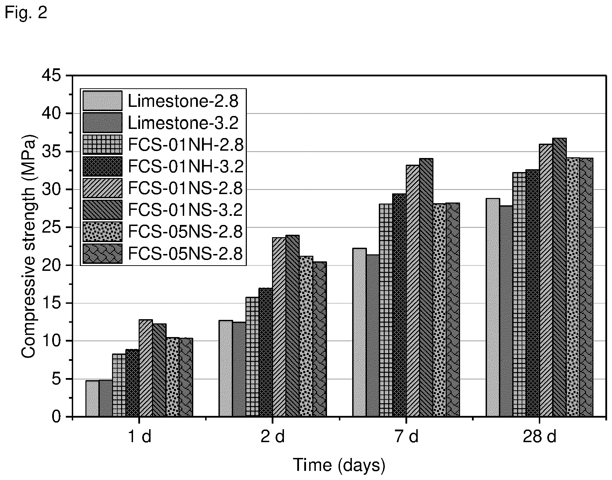

The starting material was so called "Filter cake", FCS, material obtained from recycling of fresh concrete in a precast concrete plant, i.e. an industrial recycled fresh cement paste. The material was ground and dried before mixing it into the carbonation liquid. The measured compressive strength of the mortar cubes is illustrated in figure 2 and summarized in table 3.

**Table 3**

| **clinker replacement** / **sulfate level** | **strength [MPa] after** | | | |
|---|---|---|---|---|
| | **1 day** | **2 days** | **7 days** | **28 days** |
| limestone / 2.8 | 4.8 | 12.7 | 22.2 | 28.8 |
| limestone / 3.2 | 4.8 | 12.4 | 21.4 | 27.8 |
| FCS carbonated with NaOH / 2.8 | 8.2 | 15.7 | 28.1 | 32.2 |
| FCS carbonated with NaOH / 3.2 | 8.8 | 16.9 | 29.4 | 32.6 |
| FCS carbonated with 0.1 M sulfate / 2.8 | 12.8 | 23.6 | 33.2 | 36.0 |
| FCS carbonated with 0.1 M sulfate / 3.2 | 12.2 | 23.9 | 34.1 | 36.8 |
| FCS carbonated with 0.5 M sulfate / 2.8 | 10.4 | 21.2 | 28.1 | 34.2 |
| FCS carbonated with 0.5 M sulfate / 3.2 | 10.4 | 20.4 | 28.2 | 34.1 |

The figure and table show that carbonation of the FCS material in a sodium sulphate solution provides SCM with higher compressive strength of the hardened composite binder mortars compared to material carbonated in sodium hydroxide solution. The effect is independent from the SO₃ level in the composite binder. Additional tests showed that carbonation with 0.05 N Na₂SO₄ has limited effect on the strength, so sulfate impurities which are almost always found in the starting material are not effective.

## Claims

1. Method of manufacturing supplementary cementitious materials by carbonation of a waste material rich in carbonatable Ca and Mg phases, wherein
- a starting material is provided containing the waste material and having a maximum particle size of 2 mm
- a sulfate is added to the starting material in an amount adjusted to range from 0.01 to 10 g per g starting material
- the starting material is carbonated in the presence of the sulfate, and
- a carbonated product is obtained, which is provided as the supplementary cementitious material.

2. Method according to claim 1, wherein the starting material has a maximum particle size of 1 mm, preferably of 0.5 mm, and most preferably 0.2mm.

3. Method according to claim 1 or 2, wherein the waste material is a concrete waste, preferably selected from concrete demolition waste, especially recycled concrete fines; concrete residues arising during building, especially unused ready mix concrete and left over mortar; partially hydrated cement from too long stored cement; waste arising during cleaning of concreting devices, in particular molds for manufacturing pre-cast concrete elements, especially the filter cake from pre-cast plants; and mixtures of two or more of them, wherein providing the starting material optionally includes crushing and/or grinding of the waste material.

4. Method according to one of claims 1 to 3, wherein alkali and earth alkali sulfates, preferably calcium sulfate, sodium sulfate, and potassium sulfate, are used as sulfate, more preferred sodium and/or potassium sulfate, most preferred sodium sulfate.

5. Method according to one of claims 1 to 3, wherein the amount of sulfate ranges from 0.1 to 8 g, preferably from 0.2 to 5 g, per g of starting material

6. Method according to one of claims 1 to 5, wherein the carbonation is a wet carbonation in a suspension containing water and the starting material at a temperature from 0 to 99 °C and a flow rate of gas containing 5 to 100 % carbon dioxide ranging from 1 to 100 l/h/g_{cement paste} or with a solution having a concentration of CO₂ from 0.1 to 200 g/l.

7. Method according to claim 6, wherein the sulfate is added to the water.

8. Method according to one of claims 1 to 5, wherein the carbonation is a semi-dry carbonation at a temperature ranging from 20 to 150 °C, a relative humidity ranging from 70 to 99 Vol.-%, and wherein the starting material is homogenized with the sulfate.

9. Method according to one of claims 1 to 8, wherein the supplementary cementitious material is dried and/or ground to a fineness, determined with laser granulometry of d90 ≤ 500 µm, preferably a d90 ≤ 200 µm, and most preferably a d90 ≤ 100 µm, wherein preferably the particle size distribution has a Rosin-Rammler slope n from 0.6 to 1.4, more preferably from 0.7 to 1.2.

10. Supplementary cementitious materials obtained according to one of claims 1 to 9.

11. Supplementary cementitious materials according to claim 10, **characterized by** a reactivity index of the carbonated RCF of at least 1.1 times, preferably 1.2 times, most preferred 1.3 times, that of limestone (LL according to EN 197-1) at the same replacement level of 30 % of CEM I 32.5 R according to EN 197-1, at 28 days, in mortar.

12. Use of a supplementary cementitious materials according to one of claims 10 to 9 to make a composite binder, wherein a hydraulic cement is blended with from 5 to 95 wt.-% of the supplementary cementitious material.

13. Use according to claim 12, wherein the hydraulic cement is selected from portland cement, ground portland cement clinker, calcium aluminate cement, and belite sulfoaluminate cement, preferably from portland cement and ground portland cement clinker.

14. Composite binder comprising 5 to 95 wt.-% of an hydraulic cement and 5 to 95 wt.-% of a supplementary cementitious material according to claim 10 or 11.

15. Composite binder according to claim 14, wherein the hydraulic cement is selected from portland cement, ground portland cement clinker, calcium aluminate cement, and belite sulfoaluminate cement, preferably from portland cement and ground portland cement clinker.

16. Composite binder according to claim 14 or 15, wherein the composite binder contains from 30 to 90 wt.-% hydraulic cement and from 10 to 70 wt.-% supplementary cementitious material, more preferred from 50 to 80 wt.-% hydraulic cement and from 50 to 20 wt.-% supplementary cementitious material.

17. Composite binder according to one of claims 14 to 16, wherein the composite binder additionally comprises one or more other supplementary cementitious material, preferably selected from fly ash, ground granulated blast furnace slag, and calcined clay, and/or one or more additives, preferably selected from fillers like limestone and other stone dust, pigments, fibers and mixtures thereof.

18. Use of a sulfate to enhance the reactivity of a supplementary cementitious material obtained by carbonation of a waste material rich in carbonatable Ca and Mg phases in a method according to one of claims 1 to 9, wherein
- a starting material is provided containing the rich waste material and having a maximum particle size of 2 mm
- the sulfate is added to the starting material in an amount adjusted to range from 0.01 to 10 g per g starting material
- the starting material is carbonated in the presence of the sulfate, and
- a carbonated product is obtained and provided as the supplementary cementitious material.
